# EUROPEAN PATENT APPLICATION

(11) **EP 0 521 429 A1**
(43) Date of publication of application: **07.01.1993**
(21) Application number: 92110980.7
(22) Date of filing: 29.06.1992
(51) Int. Cl.: B01D 24/12, B01D 24/40, B01D 24/46

(54) **Multistage and multilayer filter**

(30) Priority: 05.07.1991 IT GE910093
(71) Applicant: GENERAL WATERS S.p.A., I-40052 Baricella (Bologna) (IT)
(72) Inventor: Pascale Guidotti Magnani, Filippo, I-40124 Bologna (IT)
(74) Representative: Porsia, Attilio, Dr.

(57) **Abstract**

The invention relates to a multistage and multilayer filter in which the filtering beds have the minimum tickness required for retention of water polluting elements. The filter is equipped with two or more stages (F1, F2) which are superimposed, coaxial and connected together in series. Self-cleaning diffusers (5, 6, 7, 8) are provided in the top part and in the bottom of each stage, and the intermediate diffusers are interconnected. Ducts (10, 11? 12) depart from the end diffusers and from the intermediate diffusers, passing through the interior of the stages and reaching the top end of the filtration tower, where said ducts are connected to a series of exchange valves (13, 16, 17, 18, 20, 22, 23) which allow the series operation of the two filtering stages during the service phase and which permit selective backwashing of the two stages and the balanced-flow conditioning phases of the said stages before they are brought into service.

## Description

Modern filtration technology has consolidated the following principles:
1) removal of the suspended particles must be performed in a selective manner;
2) aggregation of the colloidal turbidity is influenced both by the use of special coagulating agents and by the effect of certain kinetic phenomena which occur when the water to be filtered passes through granular masses of different dimensions and shapes.

These principles have rendered obsolet thick sand beds used in gravity filters or, in some cases, in pressure filters. These beds, in fact, not having an absolute factor of uniformity, are layered gradually with the finest granules in the top part and the largest granules in the bottom part so that, if the particle suspended in the water to be filtered is not retained at the surface of the filtering bed, it inevitably enters the service cycle.

It is true that the essential filtering element of a homogeneous-granule bed is the so-called "filter film" formed by the deposition of the turbidity particles on the surface of the bed, but it is equally true that the filter film is excessively fragile and sensitive to be filtered and may be broken by particles of above average weight.

The gradual and selective removal of the particles suspended in the water may be achieved by filters with beds having several filtering layers, in which the upper layer consists of coarse granules with a low specific weight, and the lower layers consist of small-size granules with a specific weight much greater than that of the granules of the upper layer. With such filters, the turbid matter is retained at the bottom and not only at the surface and release of the turbid matter is delayed because the larger and heavier particles, already retained by the upper coarse filtering layers, cannot render critical the retention of the finer and lighter particles by the finer granules of the lower filtering layers.

According to the teaching of the prior art, filters of this type and used, being installed in series and each composed of a container with its own feet for resting on the ground, each container accommodating, in layers, filtering beds of varying characteristics. Among these filters connected in series, it is envisaged that at least a first filter should contain a bed with coarse-filtering layers and that at least a second filter should contain a bed with fine-filtering layers.

In order to improve the action of the filters, it is also known for the filtering beds to be conditioned by injecting, upstream of the said beds, chemical additives, such as coagulation and oxidation additives.

The two filters are connected in series by means of external ducts and valves, so as to allow the cyclical actuation of the selective phases of backwashing and conditioning of the said filters. For this purpose, current plant designs normally require the use of at least eight valves.

At the present time, in addition to the constructional complexity associated with a filtration plant and the difficulty of being able to achieve the desired results with aggregation of the known components, there are the extra costs involved in operation of the filters, owing to inappropriate dimensioning of the thickness of the filtering beds and, proportionately, the free space occupied by the water to be treated at the top of each filter. The thickness of the filtering beds is currently redundant owing to the belief that the positive effects of filtration are directly proportional to this thickness. In other words: operation of the filter is regarded as being better and lasting longer, the greater the thickness of the filter. It is obvious how this condition, together with the proportionally greater thickness of the free space at the top of the filter, contributes to an increase in quantity of chemical additives required for conditioning of the filtering beds. To this must be added the fact that the greater the thickness of the filtering beds, the greater the time required for backwashing and balanced-flow conditioning of the said beds.

The invention intends to protect a filter based on the following considerations. From numerous studies and tests carried out, it has been ascertained that, in order to improve the functional capacity of a multilayer filter, it is necessary to dimension the filtering beds such that they have the minimum possible thickness so as to facilitate subsequently, during the backwashing phase, expulsion of the filtered material. Operating in this way also increases the operational speed of the filter, reduces the amount of free space at the top of each filter and reduces the quantity of chemical additives and washing water used. All this also makes it possible to construct filters with very small dimensions.

It has also been ascertained that it is possible to further improve operation of the filter by arranging self-cleaning diffusers at its entry and exit ponts. Their presence improves the distribution and velocity of the water entering the filter, ensures more efficient dispersion, in the water, of the chemical additives for filter conditioning, and prevents the entry into the filtration circuit of above average particles which it might no longer be possible to eliminate during the back-washing phase.

Finally, by arranging in a single structure two or more filters connected together in series, without external piping, as instead occurs in plants of a known type, and using a limited number of valves, losses of head within the hydraulic circuit can be reduced, the cross-sections of the pipes and valves can be reduced and consequently production costs cut, simplifying installation and running of the system.

Further characteristic features of the invention, and the advantages arising therefrom, will emerge from the following description of a preferred embodiment of the said invention, illustrated purely by way of a non-limiting example in the figures of the seven accompanying illustrative plates, in which:
- Figure 1 shows a side view, with parts sectioned, of a novel two-stage filter with four filtering layers;
- Figure 2 shows a plan view of the filter, highlighting in particular the shut-off valves of the various internal ducts of the filter itself;
- Figures 3, 4 and 5 show, enlarged, the diffusers located respectively at the top, in the middle and the the bottom of the filter shown in Figure 1;
- Figures 6, 7, 8, 9 and 10 show, in schematic form, a first embodiment of filter construction during the various working, washing and conditioning sequences;
- Figures 11, 12, 13, 14 and 15 show, in schematic form, a second embodiment of filter construction during the various working, washing and conditioning sequences;
- Figures 16, 17, 18, 19 and 20 show, in schematic form, a third embodiment of filter construction during the various working, washing and conditioning sequences.

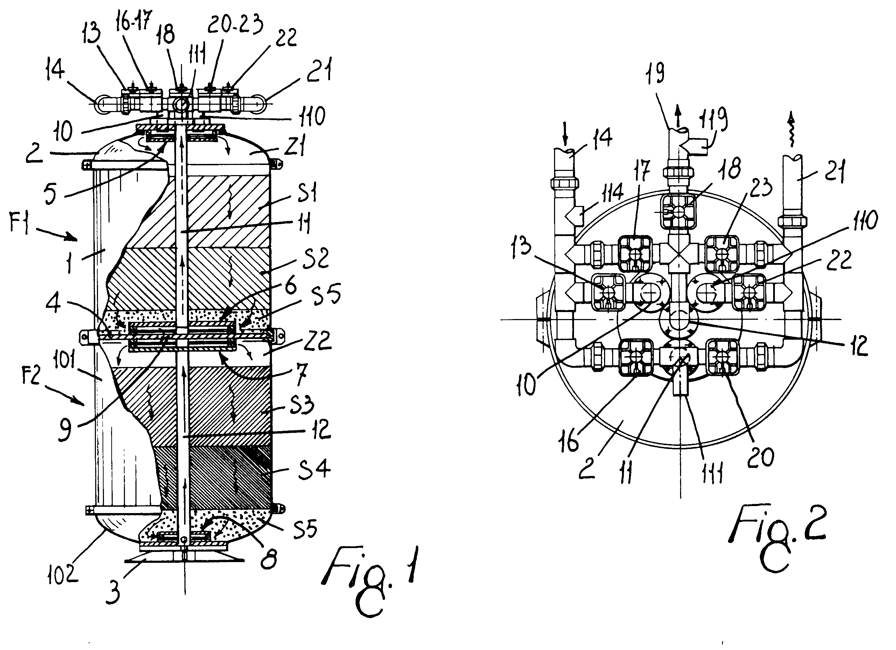

With reference first of all to Figures 1 and 2, it can be seen that the filter in question consists for example of two stages F1 and F2 located one on top of the other coaxially and connected together in series. In the example in question, the stage F1 is formed by a container 1 closed at the top by a cover 2 and flanged at the bottom onto the end of the container 101 of the other stage F2 in turn closed at the bottom by the bottom plate 102 with base 3 for resting on the ground. The stage F1 is separated from the stage F2 by a baffle 4.

S1 and S2 denote the filtering layers of the first stage and S3 and S4 the filtering layers of the second stage. The layers S5 consist of inert material and act as a support for the filtering layers, keeping the latter at a suitable distance from the bottom of the stages F1 and F2. Z1 and Z2 denote the free spaces existing at the top of the stages F1 and F2.

Annular diffusers 5, 6, 7 and 8 are mounted in a central position on the cover 2, on the bottom plate 102 and on the opposite sides of the baffle 4, the intermediate one of which 6, 7 intercommunicate via one or more openings 9 provided on the baffle 4.

With reference also to Figure 2, it can be seen that the diffusers are connected to respective ducts which lead from one end of the assembly in question, for example from the top and which pass through the cover 2 in a sealed manner. More particularly, two ducts 10, 110 lead into the diffuser 5, a duct 11 leads into the intermediate diffuser 6, while a duct 12, which in the example in question is located along the axis of the filter, leads into the bottom diffuser 8. It is understood that, differently from that illustrated, the duct 11 may be arranged coaxially with respect to the duct 12, on the outside of the latter.

Via the valve 13, the duct 10 is connected to a duct 14 normally connected to the pump for delivering the water to be filtered. The same duct 14, via the valves 16 and 17, may be connected respectively to the duct 11 of the intermediate diffuser 6 and to the duct 12 of the bottom diffuser 8, and this latter duct may be connected, via the valve 18, to the outlet duct 19 for the filtered water used during service.

Via the valve 20, the duct 11 may be connected to the drainage duct 21. Via the valves 22 and 23, the same duct 21 may be connected to the duct 110 and the duct 12, respectively.

114, 111, 119 denote branched lines from the ducts 14, 11, 19, connected to the circuits for delivering any chemical additives aiding filtration.

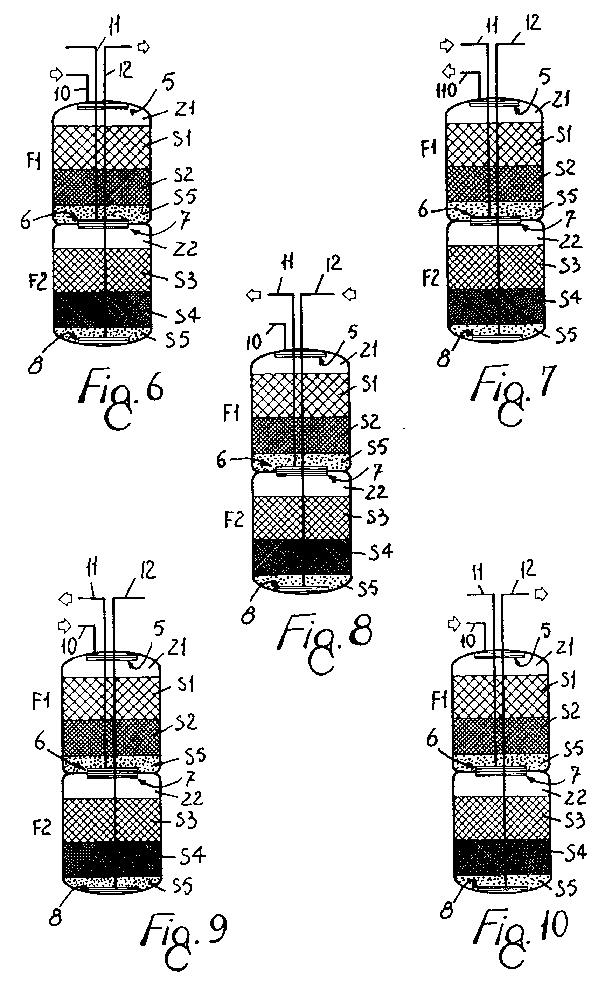

With reference also to Figure 6, it can be seen that, during normal operation of the filter, the valves 13, and 18 of Figure 2 are open, while all the other valves are closed. The water to be purified enters from the duct 14 and, via the duct 10, reaches the diffuser 5 which distributes it over 360° into the empty space Z1 of the first stage F1. From here the water passes through the filtering bed S1, S2, enters the diffuser 6, passes through the opening (s) 9 of the baffle 4, enters the diffuser 7 which distributes it over 360° into the empty space Z2 of the second stage F2. From here the water passes through the filtering bed S3, S4, enters the diffuser 8 and reaches the duct 12 which, via the valve 18, communicates with the service duct 19.

During operation, it is possible to effect, via the branched lines 114, 111, 119, chemical injections for oxidation, coagulation, neutralisation, acidification and alkalisation of the water before, during and after treatment.

Figures 7 and 8 show the phases of backwashing of the first and second stage. During the phase shown in Figure 7, the valves 16 and 22 of Figure 2 are open, while all the other valves are closed. The washing water enters from the duct 14, if necessary in combination with chemical additives supplied by the branched line 15. Via the duct 11 the washing water enters the diffuser 6 and exits over 360° from the latter so as to backwash the bed S2, S1 and reach the free space Z1 and the enter the diffuser 5. From here the water exits via the duct 110 and is discharged via the duct 21.

During the phase shown in Figure 8, the valves 17 and 20 of Figure 2 are open, while all the others are closed. The water and any washing additives channelled from the duct 14 enter the duct 12, reach the bottom diffuser 8 and from here exit over 360° and then flow back up and backwash the bed S4, S3. The water which reaches the empty space Z2, enters the diffuser 7 via the opening (s) 9 and reaches the diffuser 6 from which it exits via the duct 11 and is then discharged via the duct 21.

Figures 9 and 10 illustrate balanced-flow chemical conditioning of the two filtering stages F1 and F2. In the phase shown in Figure 9, the valves 13 and 20 of Figure 2 are open, while all the other valves are closed. The conditioning water enters from the duct 14, and the chemical products, which may be used as adjuvants during operation, for example oxidising and coagulating products, enter from the branched line 114. Via the duct 10, the conditioning fluid reaches the diffuser 5, exits from the latter over 360°, occupies the free space Z1 and then flows through the bed S1, S2, conditioning it. The fluid finally reaches the diffuser 6 and is discharged via the duct 11 and the duct 21.

During the phase illustrated in Figure 10, the valves 13 and 23 of Figure 2 are open. The conditioning fluid, which comes from the ducts 14, 114, reaches the diffuser 5, exits from the latter over 360° and occupies the free space Z1 before passing through the bed S1, S2 and reaching the diffuser 6. From here the fluid passes through the opening(s) 9 and reaches the diffuser 7 from where it exits over 360°, occupying the space Z2, then passes through the bved S3, S4 and reaches the diffuser 8, from where it then exits via the duct 12 and the duct 21. Via the branched line 111, the second stage may be conditioned with a specific chemical product.

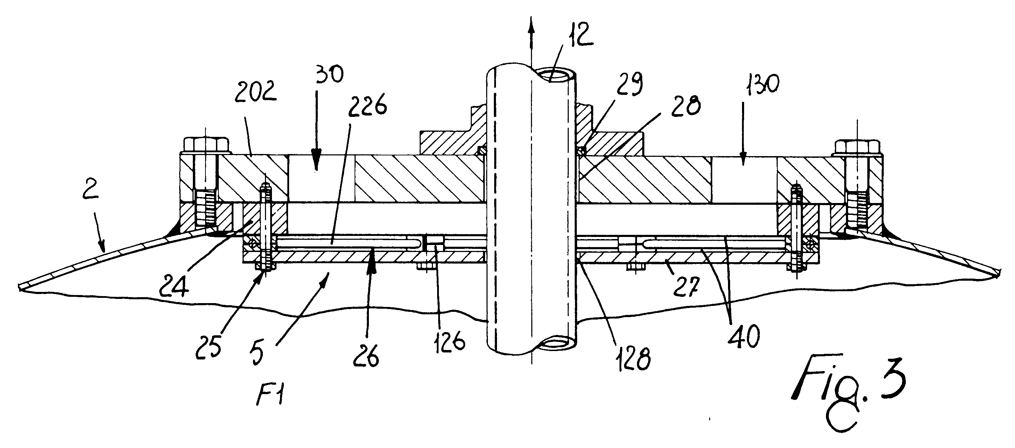

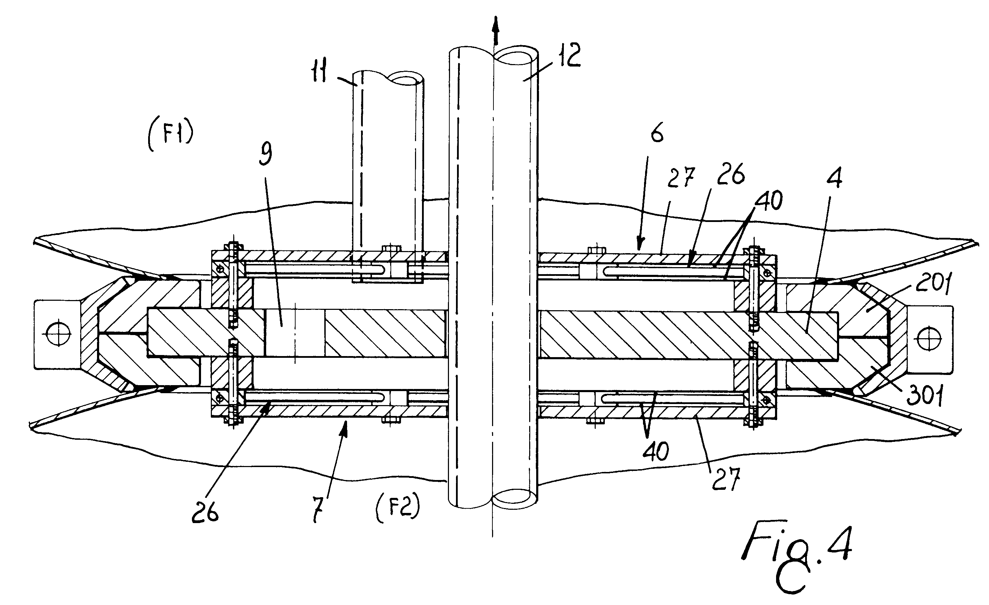

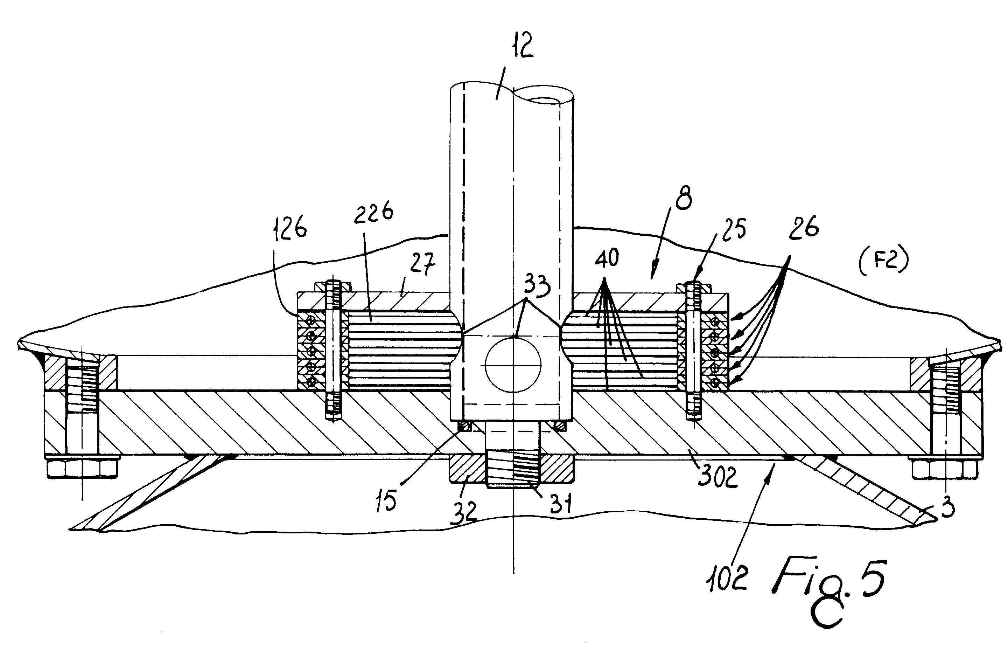

The diffusers 5, 6, 7, 8 are now illustrated with reference to Figures 3, 4, 5. The upper diffuser 5 is composed of a ring 24 fixed coaxially onto the lower face of the roof 202 of the cover 2 by means of stud bolts 25 which are also used to fix onto the said ring a rim 26 formed by small composite and identical equidistant blocks 126 which support a ring 226 having preferably a round cross-section. The covering plate 27 is placed over the rim 26 and is also fixed by means of the stud bolts 25. The ring 226 is locate preferably at the same distance both with respect to the lower face of the ring 24 and the upper face of the plate 27, so as to form the appertures 40 in the shape of circle segments, through which the liquid exits from or enters into the diffuser in question. Preferably it is envisaged that the apertures 40 should have a height of the order of about 1.5 mm. The parts 202 and 27 of the diffuser 5 are provided axially with openings 28, 128 for receiving the duct 12 which is protected externally by a sealing gasket 29. Similar openings aligned with each other (not shown) are provided in an axially offset position for receiving the duct 11 which leand to the intermediate diffuser 6, this duct also being protected externally by a sealing gasket. The plate 202 is provided with openings 30-130 for receiving in a sealed manner the pipes 10, 110 which communicate with the interior of the diffuser 5.

The intermediate diffusers 6 and 7 are entirely identical to the upper diffuser 5 and therefore are not described. The parts 27 and 4 of the assembly 6, 7 are provided with axial holes for receiving the duct 12, and the part 27 of the diffuser 6 is provided with a hole for entry of the duct 11 should the latter not be coaxial with the duct 12.

The bottom diffuser 8 differs from those considered previously in that it has a smaller diameter and is provided with several superimposed rims 26 so as to form water-flow apertures 40 having overall about the same throughput capacity as those of the upper diffusers. The duct 12 is closed at the bottom by a plug provided with a threaded stem 31 which passes through a hole provided axially on the wall 302 of the bottom plate 102 to which it is fixed by means of a nut 32. A gasket 15 ensures a sealed connection between the duct 12 and the bottom plate 102. The duct 12 opens out into the internal space of the diffuser 8 via a series of holes 33 suitably distributed over the round angle.

The construction of the filter as shown in Figures 6 to 10 can be employed for filters having different destinations of use. A first type of filter (briefly denominated "TF") is a universal filter designed for the treatment of turbid surface water (lakes, rivers, canals, natural or artificial reservoirs containing fresh water or seawater) which is not particularly coloured or ferrous. It is composed of two stages, each of which is provided with two filtering layers. The layer S1 is formed with large granules (diameter approx. 1.4 mm) and the layer S2 is formed with medium-size granules (diameter approx. 0.7 mm) of suitable minerals. The layer S1 has an optimum thickness of the order of 300 mm and the layer S2 has an optimum thickness of the order of 180 mm. The free space Z1 constitutes about 39% of the volume of the stage F1. The layer S3 of the second stage is formed with medium-size granules and has a thickness of the order of 300 mm, while the layer S4 is preferably formed mainly with fine granules (diameter approx. 0.4 mm) and has a thickness of the order of 180 mm. The empty space Z2 is also approximately of the order of 39% of the volume of the second stage F2.

The service velocity and velocity for conditioning of the filter TF will have a limit value of 22 m/h. The backwashing velocity on the othe hand will be more or less twice as great.

The first stage of the filter TF is normally treated with an oxidising solution and a coagulating solution, while the second stage is treated with an additional injection of coagulant.

Backwashing of the filter is preferably performed at predetermined times, even though the loss of head may not have reached limit values. It will be possible, however, to perform a safety backwashing operation upon reaching predetermined loss of head values, during the treatment of water of greatly varying quality.

The injection of sterilising solution prior to the backwashing phase is performed only in the case of service cycles which have no sterilising protection. Injection of sterilising solution during backwashing is normally recommended.

Operation of the filter is completely automatic. The backwashing times have been calculated so as to be of the order of 4 minutes for both the filtering stages.

The final conditioning phase at a fixed velocity of 22 m/h and using service adjuvants has a duration of about 6 minutes.

Still with reference to Figures 6 to 10, a second type of filter (denominated TFI) is designed for turbid and ferrous water. The layer S1 of the first stage has a thickness of about 300 mm and is composed of large granules, while the layer S2 is formed with medium-size granules and has a thickness of about 180 mm.

The layers S3, S4 of the second stage have a thickness of 280 and 200 mm respectively, the former being formed with medium-size granules and the latter with fine granules.

The free spaces Z1, Z2 constitute about 39% of the volume of the stages F1, F2.

The service velocity and velocity for balanced-flow conditioning of the filter TFI are of the order of 18 m/h. The backwashing velocity is of the order of 44 m/h.

Backwashing is effected at predetermined times, for example at 12 hour intervals. The loss of head values have no influencing effect.

Injection of sterilising solution during the backwashing phases is normally recommended.

Operation of the filter is completely automatic. The backwashing times are of the order of 4 minutes for each of the filtering stages. The final balanced-flow washing phase has a duration of about 6' and uses oxidising and coagulating solutions.

Still with reference to figures 6 to 10, a third type of filter (denominated TFC) is designed for water with low turbidity and coloured by humic and fulvic acids. The layers S1, S2 have a thickness of 350 and 130 mm respectively, while the layers S3, S4 have a thickness of 280 and 200 mm respectively. The materials which make up the filtering beds have the same particle size as those of the first type of filter (TF). The free spaces Z1, Z2 also constitute about 39% of the volume of the stages. The first stage is treated with oxidising and acidifying solutions, while the second stage is treated with a coagulant solution, the purpose of which is to remove both the suspended particles originating from the first stage, and the organic precipitate which causes colouring of the water. Injection of an alkalising solution is envisaged downstream of the filter.

The service velocity and velocity for balanced-flow conditioning of the filter have a limit value of 16 m/h. The backwashing velocity on the other hand is of the order of 44 m/h.

Operation of the filter is completely automatic. Backwashing is effected at predetermined times, for example at 12 hour intervals. The possibility is also envisaged of initiating backwashing at shorter time intervals, when the loss of head reaches a critical value, for example approximately 8 metres. The back-washing times are fixed at about four minutes for both filtering stages. The balanced-flow conditioning time is of the order of 8 minutes.

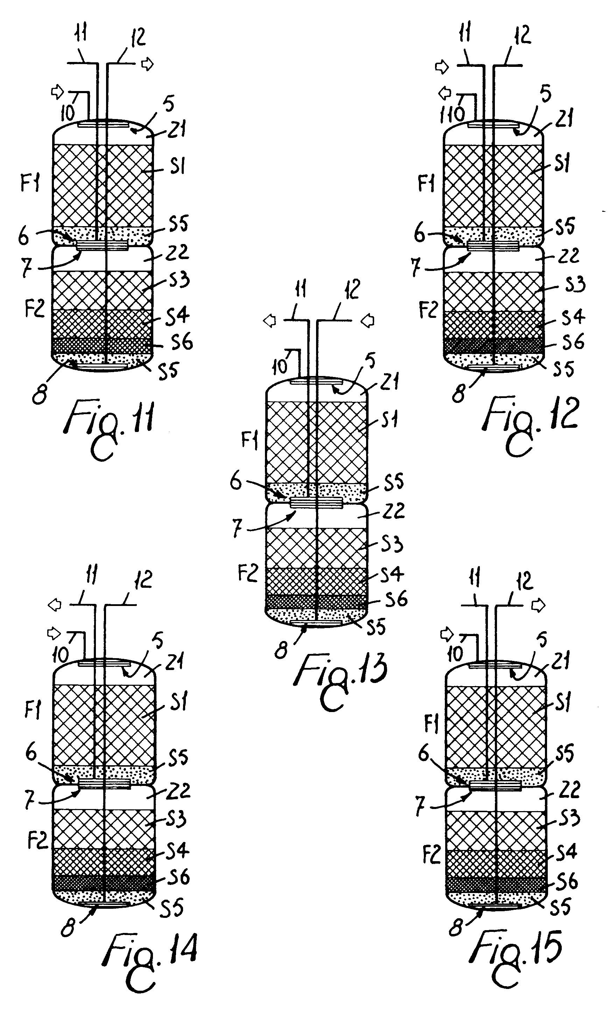

In Figures 11 to 15 there is illustrated the construction and operation of a fourth type of filter, denominated TFW which is particularly suitable for the treatment of discharge water pretreated with biological systems. The first stage F1 is normally composed of a single layer S1 of large granules with a thickness of about 430 mm. The free space Z1 constitutes about 56% of the volume of F1. The second stage F2 is formed by three filtering layers S3, S4, S6 with large, medium-size and fine granules, respectively, and with thicknesses of 210, 150, 120 mm, respectively. The fee space Z2 constitutes about 39% of the volume of F2.

The stage F1 is not treated with any oxidising or coagulating solution. The stage F2 is treated with a coagulating solution, and is intended to remove the colloidal turbidity.

The service velocity and velocity for balanced-flow conditioning have a limit value of 16 m/h. The backwashing velocity will be of the order of 44 m/h.

Backwashing is performed at predetermined times, normally at 6 hour intervals, preceded by the injection of a large dose of oxidising solution. The possibility of initiating backwashing at shorter time intervals may be envisaged in the case where the losses of head reach exceptional values, for example of the order of 12 metres.

Operation of the filter is completely automatic. The backwashing times are fixed at about 4 minutes for both the filtering stages. The final washing phase, which, as already mentioned, envisages the use of a coagulating solution useful as an adjuvant during the service phase, has a duration of about 6 minutes.

The backwashing water is completely recovered by sending the filter discharge upstream of the biological system for pretreatment of the water to be purified.

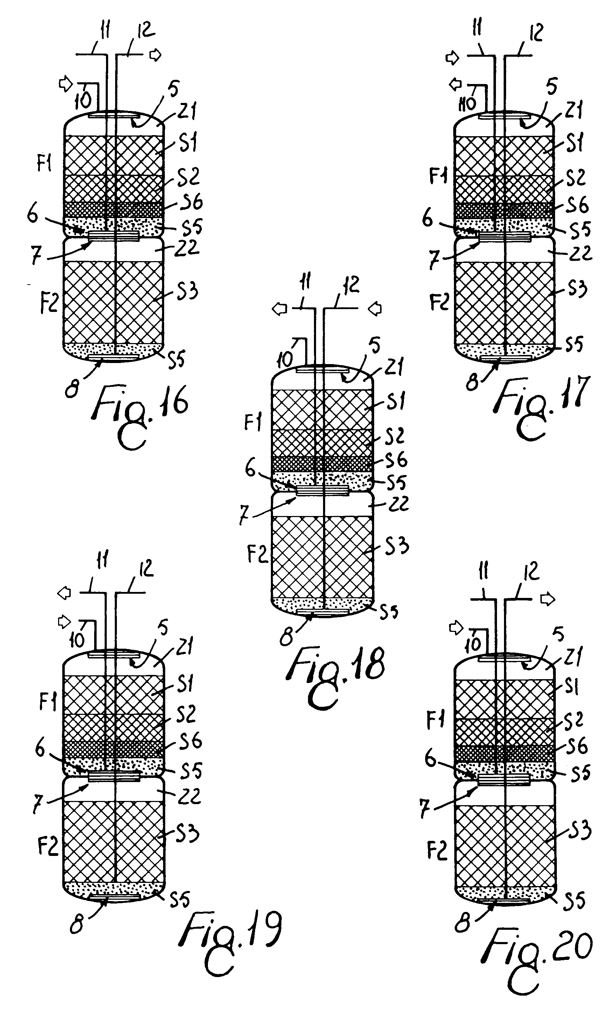

In figures 16 to 20 there is illustrated still another filter construction and operation for a fifth type and a sixth type of filter (respectively denominated "TFM" and "TFD"), provided at the first stage with three filtering layers and at the second stage with a single filtering layer.

The filter TFM has been designed for the treatment of turbid water containing iron and manganese. The first stage is treated with an oxidising solution and a coagulating solution. The second stage is treated with a solution of potassium permanganate, the purpose of which is to ensure that the layer S3 of the second stage retains a strong catalysing action for removal of the manganese.

The filtering stages S1, S2, S6 of the first stage are formed with large, medium-size and fine granules, respectively, and have a thickness of 210, 150 and 120 mm, in that order. The free space Z1 constitutes about 39% of the volume of F1. The layer S3 of the second stage is formed with large granules and has a thickness of about 420 mm. The free space Z2 constitutes about 59% of the volume of the stage F2.

The service and conditioning velocities have a limit value of 16 m/h. The backwashing velocities vary from 44 to 20 m/h for the first and for the second stage, respectively.

Backwashing is performed at predetermined times, normally every 12 hours during the cycle. In exceptional cases, backwashing may be performed more frequently, when the loss of head reaches eight metres.

The injection of sterilising solution is recommended only during backwashing of the first stage.

Operation of the filter is automatic. The back washing times are fixed at four minutes for both stages. The final washing phase has a duration of about 6 minutes.

The filter TFD has been designed for the treatment of moderately turbid and chlorinated water.

The layers S1, S2, S6 of the first stage, formed with large, medium-size and fine granules, have a thickness of 210, 150 and 120 mm, respectively. The free space Z1 constitutes about 39% of the volume of F1. The layer S3 of the second stage, which has large and absorbent granules, has a thickness of approximately 420 mm. The free space Z2 constitutes about 59% of the volume of S2.

The first stage is treated with a coagulating solution, while the second stage has the specific function of dechlorination. The service velocity and velocity for balanced-flow conditioning have a limit value of 16 m/h. Bachwashing takes place at velocities which vary from 44 to 20 m/h for the first and for the second stage. Backwashing is performed at predetermined times, normally every 12 or 24 hours of operation. Backwashing may be performed more frequently only in exceptional cases where the loss of head at the first stage exceeds 6 metres.

Operation of the filter is completely automatic. The backwashing and balanced-flow conditioning times are of the order of 4 minutes for both filtering stages.

To conclude, the filter according to the invention consists of several filtering stages, independent of one another, each with one or more beds with interspaces decreasing in the direction of flow of the stream of water to be filtered, superimposed on one another, coaxial and connected together in series. Diffusers are provided in the top part and in the bottom of each stage, and the intermediate diffusers are connected together in series. Pipes or ducts depart from the end diffusers and from the intermediate diffusers, passing through the interior of the stages and reaching the same end of the filtration tower, where said ducts are connected to a series of exchange valves which allow the series operation of the two filtering stages during the service phase, with the possibility of selective injection of chemical products for aiding filtration, upstream of the two stages and downstream of the assembly, and which permit selective backwashing of the two stages and the balanced-flow chemical conditioning phases of the said stages, in a sequence involving initially the first stage and subsequently both the stages with connection in series. During this chemical conditioning phase, the filter's capacity for retaining the particles and flocculi is reinforced and stabilised.

According to the invention, the individual filtering layers have the minimum thickness required for retention of the turbid matter such that, by means of backwashing, they can be completely freed of the particles retained during the filtration phase.

The filter according to the invention optimises all the processes involved in the technique of direct filtration and provides the following advantages:
- retention of particles or elements which cannot be retained by sand filters or multilayer filters of the conventional type;
- longer duration of the filtering cycles owing to the delay in the release of turbid matter and to the loss of head;
- advantageous ratio between the water produced and washing water, owing to the possibility of increasing the flow velocity during filtration;
- expulsion of all the filtrate at a faster rate, owing to the very shallow depth or thickness of the filtering beds;
- constant filtering efficiency over time, owing to the impossibility of irreversible retention of part of the filtrate;
- reduction in the quantity of chemical products used for aiding filtration, owing to the reduced volumes of the filtering materials and of the corresponding free spaces;
- smaller plant dimensions;
- greater automation and universality of filtering treatment and, consequently, greater technological reliability.

## Claims

1. Multistage and multilayer filter, composed of several stages with filtering beds independent of one another, located one above the other so as to be passed through in series by the water to be purified, having interspaces decreasing in the direction of flow of the water to be filtered and subdivided into stages arranged so as each to be able to be treated with a particular and suitable chemical additive which reinforces and stabilises the particle to be retained, characterised in that the filtering stages and the beds have the minimum thickness required for retention of the turbid matter or polluting element(s) in the water, so as to enable the following advantages to be achieved:
- substantial reduction in the height of the filter, also as a result of the reduced amount of free space required at the top of each filtering stage;
- smaller quantity of chemical conditioning products used, owing to the reduced volumes of the filtering materials and of the said free spaces;
- longer duration of the filtering cycles owing to the delay in the release of turbid matter and in the loss of head;
- advantageous ratio between water produced and washing water, owing to the possibility of increasing the flow velocity during filtration;
- expulsion of all the filtrate and at a faster rate during the backwashing phase.

2. Filter according to Claim 1, characterised in that, in the type (TF), suitable for the treatment of turbid surface water, freshwater or seawater which is not particularly coloured or ferrous, the first stage is formed by two active layers (S1, S2) of large granules and medium-size granules, the first with a thickness of about 300 mm and the other with a thickness of about 180 mm, while the second stage is formed by two active layers (S3, S4) of medium-size granules and fine granules, having a thickness of about 300 mm and 180 mm respectively, the free spaces (Z1, Z2) at the top of each bed constituting about 39% of the volume of the stages.

3. Filter according to Claim 1, characterised in that, in the type (TFI) suitable for the treatment of turbid and ferrous water, the bed of the first stage is composed of two active layers (S1, S2) of large and medium particle size, having a thickness of about 300 and 180 mm respectively, while the second stage is formed by two active layers (S3, S4) of medium and fine particle size having a thickness of about 280 and 200 mm respectively, the free space (Z1, Z2) at the top of each stage constituting about 39% of the volume of the said stage.

4. Filter according to Claim 1, characterised in that, in the type (TFC) for the treatment of low turbidity water coloured by humic acids, the filtering bed of the first stage is composed of two active layers (S1, S2) of large and medium particle size, having a thickness of about 350 and 130 mm respectively, while the second stage is formed by two active layers (S3, S4) of medium and fine particle size having a thickness of about 280 and 200 mm respectively, the free space (Z1, Z2) at the top of each stage constituting about 39% of the volume of the said stage.

5. Filter according to Claim 1, characterised in that, in the type (TFW) for the conditioning of water pretreated with biological systems, the bed of the first stage is composed by a single active layer (S1) of large particle size having a thickness of about 430 mm, while the free space of the first stage is of the order of 56% of the overall volume, the second stage being formed by three active beds (S3, S4, S6) of large, medium and fine particle size, respectively, having the following thickness: approx. 210, 150, 120 mm, while the free space of this second stage is of the order of about 39% of the overall volume.

6. Filter according to Claim 1, characterised in that, in the type (TFD) for the treatment of moderately turbid and chlorinated water, the bed of the first stage is composed of three layers (S1, S2, S6) of large, medium and fine particle size, respectively, having the following thickness: approx. 210, 150, 120 mm, while the free space (Z1) of this stage is of the order of 39% of the overall volume, the bed of the second stage being composed of a single adsorbent active layer (S3) of large particle size and with height of approximately 420 mm, while the empty space (Z2) of this latter stage is of the order of about 59%.

7. Filter according to Claim 1, characterised in that, in the type (TFM) for the treatment of turbid water containing iron and manganese, the bed of the first stage is formed by three active layers (21, S2, S6) of large, medium and fine particle size respectively and having the following thickness : approx. 210, 150, 120 mm, while the empty space (F1) of the first stage is about 39% of the entire volume, the bed of the second stage being formed by a single layer (S3) of material of large particle size and with a thickness of about 420 mm, while the empty space (Z2) of this last stage is of the order of about 59% of the entire volume.

8. Multistage, multilayer filter composed of several stages, each of which with several filtering layers, independent of one another, located one above the other so as to be passed through in series by the water to be purified, having interspaces decreasing in the direction of flow of the water to be filtered, arranged so as each to be able to be treated with a particular and suitable chemical additive which reinforces and stabilies the particle to be retained, characterised in that on the top part and on the bottom of each stage (F1, F2) a respective diffuser (5, 6, 7, 8) is provided in a central position, a layer (S5) of inert material of adequate height and adequate particle size being interposed between the bottom diffuser of each stage and the bed of active layers located above; the intermediate diffusers (5, 6), or the bottom diffuser of the first stage and the top diffuser of the second stage, being in direct and permanent communication with one another via one or more openings (9) provided on the diaphragm (4) which divides the two stages; ducts entering the said tower in a laterally sealed manner from at least one of the ends of the filtering tower, preferably from the upper end, there being at least one (10) for the upper diffuser, at least one (11) for the double intermediate diffuser and at least one (12) for the bottom diffuser; these ducts being connected, via their ends outside the filter, to a set of valves (13, 16, 17, 18, 20, 22, 23) and to exchange ducts.

9. Filter according to Claim 8, characterized in that the filtering stages and the beds have the minimum thickness required for retention of the turbid matter or polluting element(s) in the water.

10. Filter according to Claim 8, characterised in that the duct (12) connected to the bottom diffuser (8) is arranged axially with respect to the filter itself, while the duct (11) connected to the double intermediate diffuser (6, 7) is remote from said duct.

11. Filter according to Claim 8, characterised in that the duct (11) connected to the double intermediate diffuser (6, 7) and the duct connected to the bottom diffuser (8) can be arranged coaxially in the orderwhereby the second duct is inside the first duct.

12. Filter according to Claim 8, characterised in that the duct (14) delivering the wate to be treated may be selectively connected, by means of a traid of valves (13, 16, 17), to the duct (10) connected to the upper diffuser (5), to the duct (11) connected to the double intermediate diffuser (6, 7) and to the duct (12) connected to the bottom diffuser (8), which latter duct may be connected by means of a valve (18) to the duct (19) for discharging the purified water, it being possible for the said duct (12) connected to the bottom diffuser, for an additional duct (110) connected to the upper diffuser, and for the duct (11) connected to the intermediate diffuser to be connected by means of respective valves (23, 22, 20) to the duct (21) for discharging the water for backwashing and for balanced-flow conditioning of the filter, branched lines (114, 111, 119) being provided on the ducts (14, 19) for entry and exit of the water during operation and on the duct (11) connected at its end to the intermediate diffusers (6, 7), in order to effect connection to the means for supplying the chemical additives which aid the filtering process.

13. Filter according to Claim 8, in which the diffusers (5, 6, 7, 8) are box elements with a round cross-section, with the lateral wall formed by at least one ring (226) preferably with a round cross-section and by equidistant spacing members (126) which incorporate the said ring and which have a height greater than the diameter of the said section, such that when these spacing members are gripped between the opposite bases of the diffuser, the ring (226) is equidistant from these bases, so as to form the openings or apertures (40) of small height, preferably of the order of 1.5 mm, through which the water and the chemical products for conditioning the filter are designed to flow.

14. Filter according to Claim 13, in which the bottom diffuser (8) is formed by several annular superimposed rims (26) which give rise to several annular superimposed apertures (40) for allowing the water to flow through, this being in order to be able to dimension said diffuser with a diameter which is much smaller than that of the other diffusers and in order to ensure at the same time that it has the necessary throughput, the water being forced to flow uniformly over the entire width of the filtering beds owing to the different diameter of the diffusers.

15. Method for the operation of the filter according to Claim 8, in which, during service, the water enters the upper diffuser (5), exits from it over 360°, passes through the filtering bed of the first stage (F1), enters the bottom diffuser (6) of this stage end passes to the upper diffuser (7) of the second stage (F2) from which it exits over 360°, then passing through the filtering bed of this stage, reaching the bottom diffuser (8) and exiting via the the duct (12) connected to this diffuser.

16. Method for the operation of the filter according to Claim 8, in which, during the backwashing phase of the first stage, the water enters from the duct (11) connected to the intermediate diffuser (6, 7), passes through the filtering bed of the first stage (F1) from the bottom upwards and exits via the duct (110) connected to the upper diffuser (5), while all the other ducts are closed, while during backwashing of the second stage (F2), the water enters from the duct (12° connected to the bottom diffuser (8) of this stage, passes through the bed of this stage from the bottom upwards and exits via the duct (11) connected to the intermediate diffuser (6, 7), while all the other ducts are closed.

17. Method for the operation of the filter according to Claim 8, in which, during the balanced-flow conditioning phase of the first stage, the treatment water with the chemical filtration adjuvant enters from the duct (10) connected to the upper diffuser (5), passes through the filtering bed of the first stage and exits from the duct (11) connected to the intermediate diffuser, while during the balanced-flow conditioning phase of the second stage, the treatment water with the chemical filtration adjuvent acts on this stage in series with the first stage, entering from the duct (10) connected to the highest diffuser (5) and exiting from the duct (12) connected to the lowest diffuse (8).
